# EUROPÄISCHE PATENTSCHRIFT

(11) **EP 4 019 303 B1**
(45) Veröffentlichungstag und Bekanntmachung des Hinweises auf die Patenterteilung: **23.08.2023**
(21) Anmeldenummer: 21210018.4
(22) Anmeldetag: 23.11.2021
(51) Int. Cl.: B60G 17/019, G01B 17/00, G01S 15/08, G01S 7/521, G01S 15/88

(54) **LUTFEDER**
AIR SPRING
RESSORT PNEUMATIQUE

(30) Priorität: 22.12.2020 DE 102020216447
(43) Veröffentlichungstag der Anmeldung: 29.06.2022
(73) Patentinhaber: ContiTech Luftfedersysteme GmbH, 30165 Hannover (DE)
(72) Erfinder: STAHMER, Reinhard, 30165 Hannover (DE); BALACHONZEW, Boris, 30165 Hannover (DE)
(74) Vertreter: Continental Corporation

(56) Entgegenhaltungen:
- DE-A1-102018 216 155
- US-A1- 2014 091 505

## Beschreibung

Die Erfindung betrifft eine Luftfeder für ein Kraftfahrzeug, wobei die Luftfeder eine Vorrichtung zur berührungslosen Abstandsmessung nach dem Impuls-Echo-Verfahren innerhalb der Luftfeder des Kraftfahrzeuges aufweist, wobei die Luftfeder mindestens einen Abrollkolben, einen Abrollbalg und eine Abschlussplatte und die Vorrichtung eine Sende-Empfangs-Komponente mit einer Schallquelle und einer Reflektorkomponente aufweisen.

Derartige Vorrichtungen sind z.B. aus der DE 36 20 957 A1 vorbekannt. Die in der Praxis verwendeten runden Schallwandler mit ebener Abstrahlfläche erzeugen ein keulenförmiges Schallfeld. Die Halbwertsbreite der Schallintensität, die auch als Öffnungswinkel der Schallkeule angegeben wird, ist abhängig von dem Durchmesser der schallerzeugenden Fläche und der Frequenz des Ultraschalls. Beide Faktoren verkleinern den Öffnungswinkel. Bei der üblichen Auslegung des Wandlers für Nutzfahrzeug-Luftfedern beträgt der Öffnungswinkel seiner Schallkeule zwischen 10° und 15°.

Für die Messung der Federhöhe ist es notwendig, dass die reflektierten Schallimpulse den Schallwandler mit hinreichender Intensität erreichen, um ein auswertbares elektrisches Echosignal zu erzeugen. Um dies zu gewährleisten, sollte die Reflexionsfläche möglichst senkrecht zur Ausbreitungsrichtung des Schallstrahles liegen.

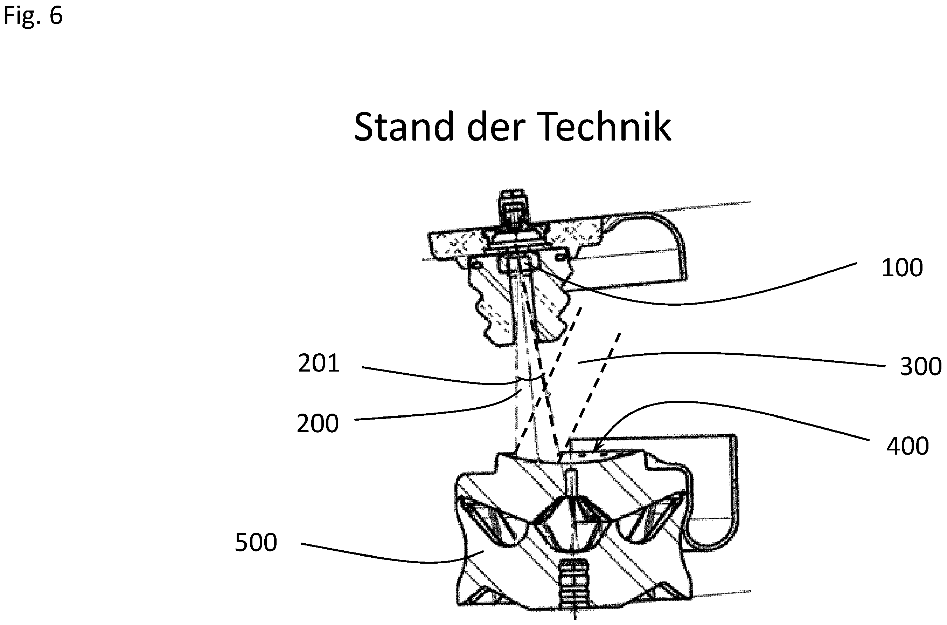

Die Fig. 6 zeigt eine derartige Vorrichtung gemäß dem Stand der Technik in einer Prinzipdarstellung. Ein Schallwandler 100 erzeugt eine Schallkeule 200 mit einem Öffnungswinkel 201. Im gezeigten Betriebspunkt kommt es zu einer Reflexion 300 der Schallkeule 200 an einer Prallplatte 400 eines Luftfederkolbens 500, die aufgrund der gezeigten Geometrie und der glatten Oberfläche der Prallplatte 400 keinerlei Echo auf den Schallwandler 100 zurückwirft.

Nach dem Stand der Technik käme es im gezeigten Fall also zu einem Versagen der Abstandsmessung.

Während des Betriebes von Luftfedern ist die Forderung nach der Orthogonalität zwischen der Richtung des Schallstrahls und der reflektierenden Ebene häufig nicht erfüllt, wenn die Anschlussplatte und der Kolben entsprechend der Federungskinematik gegeneinander geneigt sind. Auch bei einem horizontalen Versatz zwischen den beiden Enden der Luftfeder wird die Laufzeitmessung gestört, wenn sich ein zu kleiner Teil des Reflektors in dem Schallfeld befindet und deshalb zu wenig Schallenergie zu dem Schallwandler zurückstrahlt.

Die Patentschrift DE 196 48 112 C1 schlägt einen Puffer vor, der entsprechend der Einbauposition des Schallwandlers konvex geformt ist, so dass er in allen kinematischen Situationen der Feder ein hinreichend starkes Echo zu dem Schallwandler zurückstrahlt. Dieser Ansatz verursacht hohen Aufwand, weil die Form des reflektierenden Puffers an jeden Luftfedertyp angepasst werden muss.

In der DE 10 2018 216 155 A1 ist eine Luftfeder entsprechend dem Oberbegriff des Anspruchs 1 offenbart. Sie beschreibt eine Vorrichtung zur berührungslosen Abstandsmessung der eingangs geschilderten Art offenbart, bei der der Reflektor eine Reflexionsfläche aufweist, die mehr oder weniger punktförmige Unebenheiten aufweist, wobei die Unebenheiten eine vorbestimmte Anordnung auf der Reflexionsfläche sowie eine vorbestimmte Form und Größe aufweisen.

Derartige vorbestimmte Unebenheiten verursachen eine breit gestreute Reflexion von Schallwellen, die je nach Auftreffwinkel der Schallkeule in viele verschiedene Raumrichtungen zurückstrahlt und die ein mehrfaches, für die entsprechende Lage, Form und Größe der Unebenheiten typisches Echo der ausgesendeten Ultraschallwellen der Schallkeule verursachen.

Durch die punktuelle Schallreflexion ist jedoch die reflektierte Leistung recht gering. Außerdem kann ein auf die Reflexionsfläche Auftreffen der Puffer wegen der geringen Größe der Unebenheiten und der damit verbundenen lokal hohen Flächenpressung Schaden nehmen oder auch die Unebenheiten selbst beschädigen. Insbesondere trifft dies auf Kunststoffpuffer zu.

Die US 2014/091505 A1 offenbart eine Gasfederanordnung mit einem ersten Ende, einem dem ersten Ende gegenüberliegenden zweiten Ende und einer Mehrzahl von entlang dem ersten Ende ausgebildeten Reflektorflächen. Ein erster reflektierender Bereich erstreckt sich von der ersten Endfläche in einem ersten eingeschlossenen Winkel. Ein zweiter reflektierender Bereich erstreckt sich von dem ersten reflektierenden Bereich in einem zweiten eingeschlossenen Winkel, der sich von dem ersten eingeschlossenen Winkel unterscheidet. Nachteiliger Weise ist die Orthogonalität zwischen der Richtung des Schallstrahls und der reflektierenden Ebene weiterhin abhängig von einzelnen Winkeln der Anschlussplatte und des Kolbens zueinander.

Der Erfindung lag die Aufgabe zugrunde, die eingangs geschilderte Vorrichtung derart zu verbessern, dass eine zuverlässige, zur Auswertung der Abstandsmessung möglichst starke Reflexion der Schallwellen zum Schallwandler in jeder kinematischen Bedingung der Luftfeder gegeben ist, wobei die Vorrichtung auch für Anforderungen bei Anschlagpufferberührungen geeignet ist.

Diese Aufgabe wird dadurch gelöst, dass die Reflektorkomponente eine Reflexionsfläche aus Rückstrahlkörpern aufweist, die eine Form von ringförmig aneinander aufgereihten, einander sich berührenden, etwa längshalbierten Kegelstümpfen aufweist, wobei die derart ausgebildeten Reflexionskörper auch als Kegelstumpfsektoren bezeichnet werden und wobei die Kegelstumpfsektoren radial ausgerichtet sind und eine so geartete Konizität aufweisen, dass die aus der Reflexionsfläche herausragenden Scheitel aller Kegelstumpfsektoren eine gemeinsame Ebene tangieren und sich dabei so überschneiden, dass die dabei gebildeten Sektorwinkel der einzelnen Kegelstumpfsektoren immer kleiner als 180° sind.

Bei diesem Aufbau des Reflektors wird sichergestellt, dass ein auftreffender Schall so reflektiert wird, dass die dabei erzeugte Schallfront breit ist und auch nicht abreißt, wenn sich die Winkellage der Reflexionsfläche gegenüber dem auftreffenden Schall ändert, solange die auftreffende Schallkeule den Reflektor noch trifft. Es bleibt unter Verwinkelung immer eine Rückstrahlkante erhalten, die direkt in die Richtung der Schallquelle reflektiert. Es erfolgt immer eine direkte Reflexion, weil durch Interferenz der Rückstrahl-Schallkeulen der benachbarten Kegelstumpfsektoren auch Zwischenzustände abgedeckt sind.

Durch die Ausbildung der Reflexionsfläche, bei der die Scheitel aller Kegelstumpfsektoren alle eine gemeinsame Ebene tangieren, ist die Vorrichtung auch selbst als Anschlagpuffer geeignet. Bei voller Einfederung der Luftfeder tangieren die Scheitel aller Kegelstumpfsektoren des Reflektors die Abschlussplatte daher gleichzeitig, so dass keine plastische Deformation des Reflektors im Pufferanschlagfall zu erwarten ist.

In einer Weiterbildung der Erfindung ist die Vorrichtung an den Abrollkolben angeclipst.

In einer Weiterbildung der Erfindung ist die Vorrichtung an den Abrollkolben angeschraubt.

In einer Weiterbildung der Erfindung weist die Vorrichtung einen Durchmesser auf, der mit einer Öffnung des Abrollbalges kommunizieren kann, sodass der Abrollbalg auch bei angeclipster oder angeschraubter Vorrichtung noch auf dem Abrollkolben angeordnet werden kann.

Diese Anordnungen haben den Vorteil, dass die Montage der Luftfeder vereinfacht ist.

In einer Weiterbildung der Erfindung ist die Vorrichtung ringkragenförmig ausgebildet, wobei die innere Öffnung des Ringkragens einen Anschlagpuffer aufweist.

In einer Weiterbildung der Erfindung sind der Ringkragen und der Anschlagpuffer zweiteilig ausgebildet.

In einer Weiterbildung der Erfindung sind der Ringkragen und der Anschlagpuffer zusammenvulkanisiert.

In einer Weiterbildung der Erfindung sind der Ringkragen und der Anschlagpuffer einstückig aus Gummi zusammenvulkanisiert.

In einer Weiterbildung der Erfindung sind der Ringkragen und der Anschlagpuffer aus Gummiwerkstoffen unterschiedlicher Härte ausgebildet.

Diese Ausführungsformen bieten eine große Vielfalt an Gestaltungs- und Montagemöglichkeiten, sodass eine individuelle Anpassung an verschiedene Luftfeder Typen leicht möglich ist.

In einer Weiterbildung der Erfindung ist der Reflektor aus Gummi oder Kunststoff ausgebildet.

Eine derartige Ausbildung bietet die Möglichkeit, die Werkstoffe so auszuwählen, dass der Reflektor selbst als Anschlagpuffer verwendet werden kann.

Anhand der Zeichnung wird nachstehend ein Beispiel der Erfindung näher erläutert. Es zeigt
- Fig. 1: eine perspektivische Draufsicht auf eine erfindungsgemäße Vorrichtung,
- Fig. 2: eine Prinzipdarstellung der Kegelstumpfanordnung auf der Reflexionsfläche von außen,
- Fig. 3: eine Prinzipdarstellung der Kegelstumpfanordnung auf der Reflexionsfläche von innen,
- Fig. 4: eine Prinzipskizze einer Schallreflexion bei verwickelter Vorrichtung,
- Fig. 5: einen Schnitt durch eine erfindungsgemäße Vorrichtung mit anvulkanisiertem Anschlagpuffer
- Fig. 6: eine Prinzipdarstellung einer gattungsgemäßen Vorrichtung nach dem Stand der Technik.

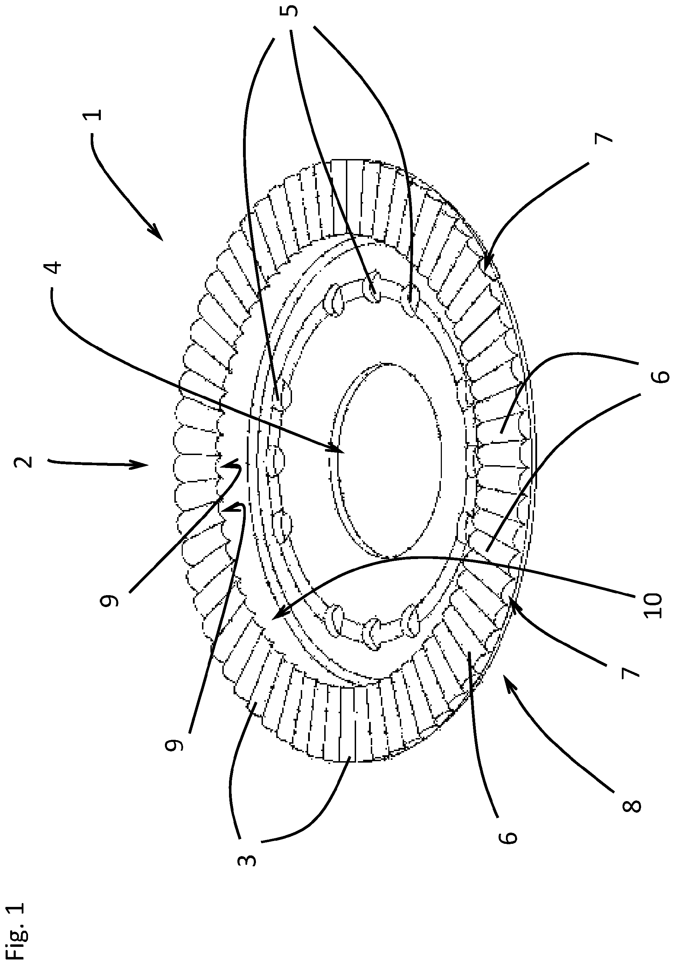

Die Fig. 1 zeigt eine erfindungsgemäße Vorrichtung 1 in einer perspektivischen Ansicht. Die Vorrichtung 1 weist eine Reflexionsfläche 2 auf, die aus etwa halbierten, aneinandergereihten und sich berührenden Kegelstümpfen 3 kreisringförmig ausgebildet ist.

Mittig weist die Vorrichtung 1 eine Öffnung 4 auf, die zur Aufnahme eines hier nicht gezeigten Anschlagpuffers vorgesehen ist. Um die Öffnung 4 herum zentrisch angeordnet sind Bohrungen 5, die einen Luftaustausch zwischen der Vorrichtung 1 und einem hier nicht gezeigten Abrollkolben ermöglichen.

Die Kegelstumpfsektoren 3 sind so angeordnet, dass alle ihre aus der Reflexionsfläche 2 herausragenden Mantelflächen 6 mit ihrem Scheitel eine gedachte gemeinsame Ebene berühren. Dazu sind die Kegelstumpfsektoren 3 so ausgebildet, dass ihre großen Radien 7 am Außenrand 8 der Reflexionsfläche 2 und ihre kleinen Radien 9 am Innenrand 10 der Reflexionsfläche 2 zu liegen kommen.

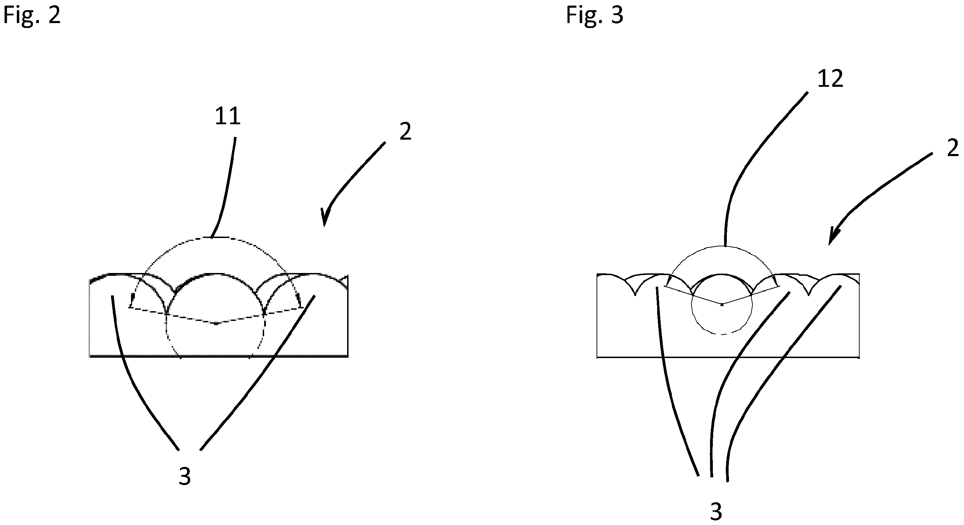

Die Fig. 2 zeigt einen Teilausschnitt der Reflexionsfläche 2 an ihrem Außenrand 8. Die Kegelstumpfsektoren 3 berühren sich und sind so angeordnet, dass an jedem Kegelstumpfabschnitt 3 ein Sektorwinkel 11 ausgebildet ist, der kleiner als 180° ist.

Die Fig. 3 zeigt einen Teilausschnitt der Reflexionsfläche 2 an ihrem Innenrand 10. Die Kegelstumpfsektoren 3 berühren sich und sind so angeordnet, dass an jedem Kegelstumpfabschnitt 3 ein Sektorwinkel 12 ausgebildet ist, der ebenfalls kleiner als 180° ist.

Durch die Ausbildung von Sektorenwinkeln <180° wird eine Bildung von Hinterschnitten vermieden.

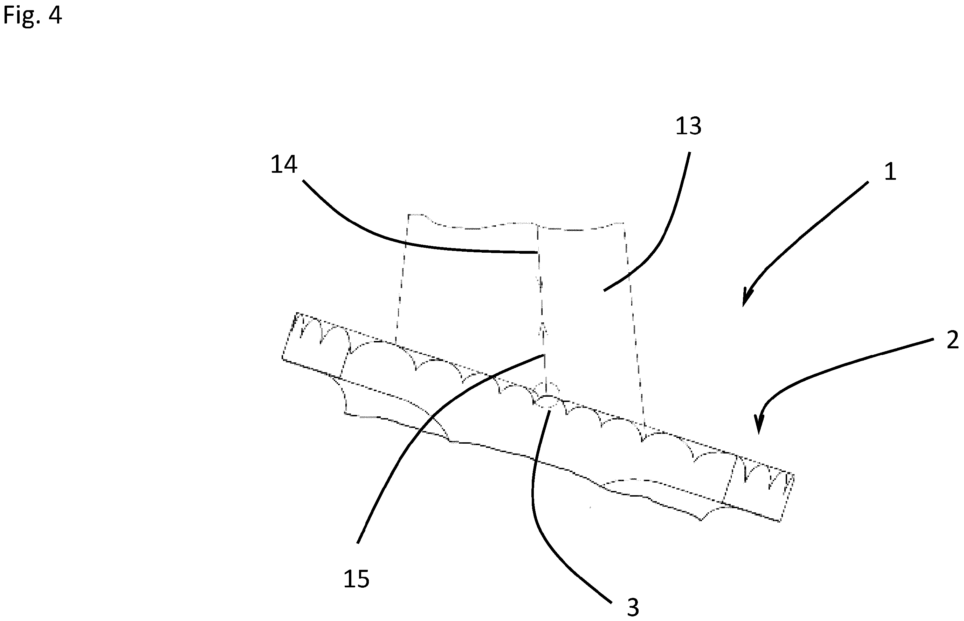

In der Fig. 4 ist eine Prinzipskizze der erfindungsgemäßen Vorrichtung 1 mit einem Schallkegel 13 gezeigt. Die Reflexionsfläche 2 ist gegenüber der gedachten Mittellinie des Schallkegels 13 geneigt, sodass sie mit der gedachten Mittellinie des Schallkegels 13 keinen rechten Winkel bildet. Exemplarisch ist eine durch einen Pfeil 14 symbolisierte Schallwelle gezeigt, die aufgrund der Ausbildung der Reflexionsfläche 2 auf einen der Kegelstumpfsektoren 3 trifft und von dort in genau gleicher Richtung, hier durch einen Pfeil 15 symbolisiert, wieder reflektiert wird. Die Ausbildung der Reflexionsfläche 2 sorgt dafür, dass dies bei allen die Reflexionsfläche 2 treffenden Schallwellen zutrifft.

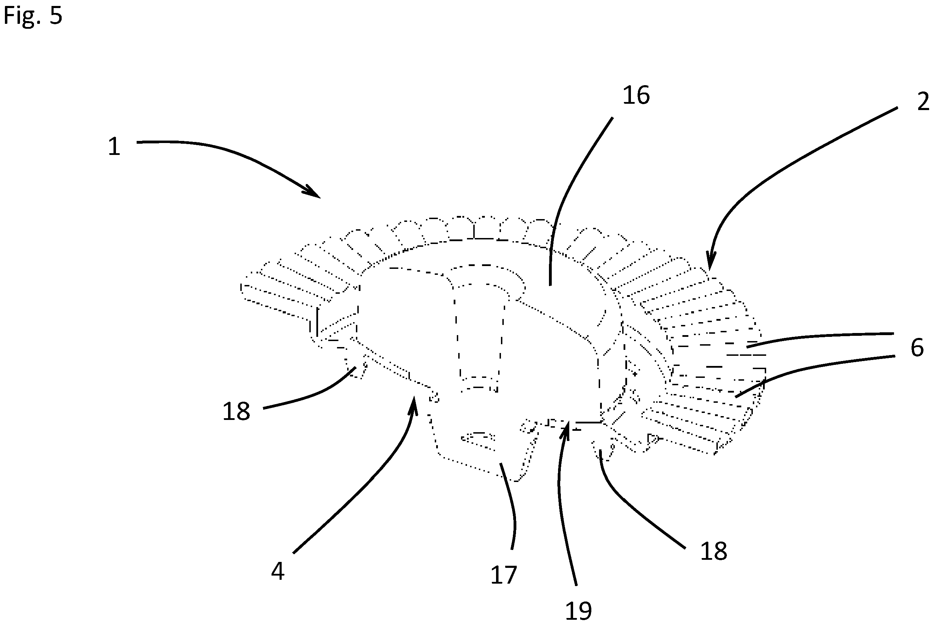

In der Fig. 5 ist eine Ausführungsform der erfindungsgemäßen Vorrichtung 1 gezeigt, bei der ein Anschlagpuffer 16 mittig in der Vorrichtung 1 angeordnet ist. Die Vorrichtung 1 ist aus einem Kunststoff und der Anschlagpuffer 16 aus einem Gummiwerkstoff ausgebildet. Der Anschlagpuffer 16 ragt mit seinem Fuß 17 durch die Öffnung 4 der Vorrichtung 1. Auf der der Reflexionsfläche 2 abgewandten Seite der Vorrichtung 1 sind 2 widerhakenartige Halteelemente 18 angeordnet, mit der die Vorrichtung 1 in einen hier nicht gezeigten Abrollkolben einclipsbar ist.

An einer Berührungsfläche 19 ist der Anschlagpuffer 16 an der Vorrichtung 1 anvulkanisiert. Der Anschlagpuffer 16 ragt über die gemeinsame gedachte Ebene der Mantelflächen 6 der Kegelstumpfsektoren 3 über ein vorbestimmtes Maß hinaus, sodass ein Auftreffen von Bauteilen einer hier nicht gezeigten Luftfeder auf die Vorrichtung 1 vermieden wird.

### Bezugszeichenliste

### (Teil der Beschreibung)

- 1: Vorrichtung
- 2: Reflexionsfläche der Vorrichtung 1
- 3: Kegelstumpfsektoren der Reflexionsfläche 2
- 4: Öffnung in der Vorrichtung 1
- 5: Bohrungen in der Vorrichtung 1
- 6: Mantelflächen der Kegelstumpfsektoren 3
- 7: große Radien der Kegelstumpfsektoren 3
- 8: Außenrand der Reflexionsfläche 2
- 9: kleine Radien der Kegelstumpfsektoren 3
- 10: Innenrand der Reflexionsfläche 2
- 11, 12: Sektorwinkel
- 13: Schallkegel
- 14: Pfeil, Schallwelle
- 15: Pfeil, Reflexionswelle
- 16: Anschlagpuffer
- 17: Fuß des Anschlagpuffers 16
- 18: Halteelemente der Vorrichtung 1
- 19: Berührungsfläche zwischen Anschlagpuffer 16 und Vorrichtung 1
- 100: Ultraschallwandler/Sende-Empfangs-Komponente (Stand der Technik)
- 200: Schallkeule des Ultraschallwandlers 100 (Stand der Technik)
- 201: Öffnungswinkel der Schallkeule 200 (Stand der Technik)
- 300: Reflexion der Schallkeule 200 (Stand der Technik)
- 400: Prallplatte (Stand der Technik)
- 500: Luftfederkolben (Stand der Technik)

## Patentansprüche

1. Luftfeder für ein Kraftfahrzeug, wobei die Luftfeder eine Vorrichtung (1) zur berührungslosen Abstandsmessung nach dem Impuls-Echo-Verfahren innerhalb der Luftfeder des Kraftfahrzeuges aufweist, wobei die Luftfeder mindestens einen Abrollkolben, einen Abrollbalg und eine Abschlussplatte und die Vorrichtung eine Sende-Empfangs-Komponente (100) mit einem Schallkegel(13) und einer Reflektorkomponente (2, 3, 400) aufweisen,
**dadurch gekennzeichnet, dass**
die Reflektorkomponente eine Reflexionsfläche (2) aus Rückstrahlkörpern (3) aufweist, die eine Form von ringförmig aufgereihten, einander sich berührenden etwa längshalbierten Kegelstümpfen (3) aufweist, wobei die derart ausgebildeten Reflexionskörper auch als Kegelstumpfsektoren bezeichnet werden und die Kegelstumpfsektoren (3) radial ausgerichtet sind und eine so geartete Konizität aufweisen, dass die aus der Reflexionsfläche (2) herausragenden Scheitel aller Kegelstumpfsektoren (3) eine gedachte gemeinsame Ebene tangieren und sich dabei so überschneiden, dass die dabei gebildeten Sektorwinkel (11, 12) der einzelnen Kegelstumpfsektoren (3) immer kleiner als 180° sind.

2. Luftfeder nach Anspruch 1, **dadurch gekennzeichnet, dass** die Vorrichtung (1) an den Abrollkolben angeclipst ist.

3. Luftfeder nach Anspruch 1, **dadurch gekennzeichnet, dass** die Vorrichtung (1) an den Abrollkolben angeschraubt ist.

4. Luftfeder nach Anspruch 1, 2 oder 3, **dadurch gekennzeichnet, dass** die Vorrichtung (1) einen Durchmesser aufweist, der mit einer Öffnung des Abrollbalges kommuniziert, sodass der Abrollbalg auch bei angeclipster oder angeschraubter Vorrichtung (1) noch auf dem Abrollkolben montierbar ist.

5. Luftfeder nach einem der vorstehenden Ansprüche, **dadurch gekennzeichnet, dass** die Vorrichtung (1) ringkragenförmig ausgebildet ist, wobei die innere Öffnung (4) des Ringkragens einen Anschlagpuffer (16) aufweist.

6. Luftfeder nach Anspruch 5, **dadurch gekennzeichnet, dass** der Ringkragen und der Anschlagpuffer (16) zweiteilig ausgebildet sind.

7. Luftfeder nach Anspruch 5, **dadurch gekennzeichnet, dass** der Ringkragen und der Anschlagpuffer (16) aneinander vulkanisiert sind.

8. Luftfeder nach Anspruch 5, **dadurch gekennzeichnet, dass** der Ringkragen und der Anschlagpuffer einstückig aus Gummi vulkanisiert sind.

9. Luftfeder nach Anspruch 5, **dadurch gekennzeichnet, dass** der Ringkragen und der Anschlagpuffer (16) aus Gummiwerkstoffen unterschiedlicher Härte ausgebildet sind.

10. Luftfeder nach Anspruch 5, **dadurch gekennzeichnet, dass** der Ringkragen und der Anschlagpuffer (16) aus Kunststoff oder Gummi ausgeführt sind, wobei ein Teil an das andere angespritzt ist.

11. Luftfeder nach Anspruch 1 bis 4, **dadurch gekennzeichnet, dass** der Reflektor aus Gummi oder Kunststoff ausgebildet ist.

## Claims

1. Air spring for a motor vehicle, wherein the air spring has a device (1) for noncontact distance measurement in accordance with the pulse-echo method within the air spring of the motor vehicle, wherein the air spring has at least one rolling piston, a rolling bellows and a closure plate, and the device has a transmitting-receiving component (100) with a sound cone (13) and a reflector component (2, 3, 400),
**characterized in that**
the reflector component has a reflection surface (2) made of backscatter elements (3), which has a form of approximately longitudinally bisected truncated cones (3) touching one another and lined up in the form of a ring, wherein the reflection bodies formed in this way are also designated truncated cone sectors and the truncated cone sectors (3) are radially aligned and have a conicity designed such that the vertices, projecting from the reflection surface (2), of all the truncated cone sectors (3) touch an imaginary common plane and intersect such that the sector angles (11, 12) formed by the individual truncated cone sectors (3) are always less than 180°.

2. Air spring according to Claim 1, **characterized in that** the device (1) is clipped onto the rolling piston.

3. Air spring according to Claim 1, **characterized in that** the device (1) is screwed onto the rolling piston.

4. Air spring according to Claim 1, 2 or 3, **characterized in that** the device (1) has a diameter which communicates with an opening in the rolling bellows, so that the rolling bellows can still be mounted on the rolling piston even when the device (1) is clipped on or screwed on.

5. Air spring according to one of the preceding claims, **characterized in that** the device (1) is in the form of an annular collar, wherein the internal opening (4) of the annular collar has a stop buffer (16).

6. Air spring according to Claim 5, **characterized in that** the annular collar and the stop buffer (16) are formed in two parts.

7. Air spring according to Claim 5, **characterized in that** the annular collar and the stop buffer (16) are vulcanized to each other.

8. Air spring according to Claim 5, **characterized in that** the annular collar and the stop buffer are vulcanized in one piece from rubber.

9. Air spring according to Claim 5, **characterized in that** the annular collar and the stop buffer (16) are formed from rubber materials of different hardness.

10. Air spring according to Claim 5, **characterized in that** the annular collar and the stop buffer (16) are made of plastic or rubber, one part being injection moulded onto the other.

11. Air spring according to Claim 1 to 4, **characterized in that** the reflector is formed from rubber or plastic.

## Revendications

1. Ressort pneumatique pour un véhicule automobile, le ressort pneumatique présentant un dispositif (1) pour la mesure de distance sans contact selon le procédé d'écho d'impulsion à l'intérieur du ressort pneumatique du véhicule automobile, le ressort pneumatique présentant au moins un piston de déroulement, un soufflet de roulement et une plaque de fermeture et le dispositif présentant un composant d'émission-réception (100) avec un cône acoustique (13) et un composant réflecteur (2, 3, 400),
**caractérisé en ce que**
le composant réflecteur présente une surface de réflexion (2) composée de corps de réfléchissement de rayonnement (3) qui présentent une forme de cônes tronqués alignés sous forme annulaire, en contact les uns avec les autres, à peu près divisés longitudinalement en deux, les corps de réflexion ainsi formés étant également nommés secteurs tronconiques et les secteurs tronconiques (3) étant orientés radialement et présentant une conicité d'un type tel que les sommets de tous les secteurs tronconiques (3), qui dépassent de la surface de réflexion (2), sont tangents à un plan commun imaginaire et se recoupent de telle sorte que les angles de secteur (11, 12) ainsi formés des secteurs tronconiques (3) individuels sont toujours inférieurs à 180°.

2. Ressort pneumatique selon la revendication 1, **caractérisé en ce que** le dispositif (1) est clipsé sur le piston de déroulement.

3. Ressort pneumatique selon la revendication 1, **caractérisé en ce que** le dispositif (1) est vissé sur le piston de déroulement.

4. Ressort pneumatique selon la revendication 1, 2 ou 3, **caractérisé en ce que** le dispositif (1) présente un diamètre qui communique avec une ouverture du soufflet de déroulement, de telle sorte que le soufflet de déroulement peut encore être monté sur le piston de déroulement même lorsque le dispositif (1) est clipsé ou vissé.

5. Ressort pneumatique selon l'une quelconque des revendications précédentes, **caractérisé en ce que** le dispositif (1) est configuré sous forme de collerette annulaire, l'ouverture intérieure (4) de la collerette annulaire présentant un tampon de butée (16).

6. Ressort pneumatique selon la revendication 5, **caractérisé en ce que** la collerette annulaire et le tampon de butée (16) sont formés en deux parties.

7. Ressort pneumatique selon la revendication 5, **caractérisé en ce que** la collerette annulaire et le tampon de butée (16) sont vulcanisés l'un sur l'autre.

8. Ressort pneumatique selon la revendication 5, **caractérisé en ce que** la collerette annulaire et le tampon de butée sont vulcanisés d'un seul tenant en caoutchouc.

9. Ressort pneumatique selon la revendication 5, **caractérisé en ce que** la collerette annulaire et le tampon de butée (16) sont formés de matériaux en caoutchouc de dureté différente.

10. Ressort pneumatique selon la revendication 5, **caractérisé en ce que** la collerette annulaire et le tampon de butée (16) sont réalisés en matière plastique ou en caoutchouc, une partie étant moulée par injection sur l'autre.

11. Ressort pneumatique selon les revendications 1 à 4, **caractérisé en ce que** le réflecteur est réalisé en caoutchouc ou en plastique.
